# EUROPEAN PATENT SPECIFICATION

(11) **EP 3 838 854 B1**
(45) Date of publication and mention of the grant of the patent: **04.05.2022**
(21) Application number: 20215690.7
(22) Date of filing: 18.12.2020
(51) Int. Cl.: C03B 33/03, C03B 33/037

(54) **METHOD FOR CUTTING A GLASS SHEET**
VERFAHREN UM EINE GLASSCHEIBE ZU SCHNEIDEN
MÉTHODE DE DÉCOUPE D'UNE FEUILLE DE VERRE

(30) Priority: 19.12.2019 IT 201900024832
(43) Date of publication of application: 23.06.2021
(73) Proprietor: Bottero S.p.A., 12100 Cuneo (IT)
(72) Inventor: ARNAUDO, Fabio, 12100 CUNEO (IT); MASOERO, Alberto, 12100 CUNEO (IT)
(74) Representative: Bergadano, Mirko

(56) References cited:
- EP-A1- 2 275 388
- EP-A1- 3 184 493

## Description

### TECHNICAL FIELD

The present invention relates to a method for cutting a glass sheet.

In particular, the present invention relates to a method for cutting a glass sheet according to a predetermined sheet-cutting programme.

### BACKGROUND ART

The use of a cutting machine having a front supporting surface, a rear supporting surface and a cutting bridge is well-known for cutting an extended glass sheet, that is, about 6100x3200 millimetres in size. The cutting bridge is arranged in a fixed position between the front and rear supporting surfaces and comprises a cutting head movable in a cutting direction, which is single for cutting monolithic glass sheets or double for cutting laminated glass sheets.

Here and hereinafter, the terms "front" and "rear" refer to the feeding direction of the sheet to be cut in the cutting machine.

The glass sheet is cut by arranging the sheet on the rear supporting surface, feeding the sheet in a longitudinal direction toward the front supporting surface and under the cutting bridge and, after bringing it into abutment against a reference device, cutting the sheet along a line parallel to the cutting direction, thus separating a first crossbeam.

The crossbeam, if already finished, i.e., if it does not require further cutting, is moved away from the supporting surface.

When, on the other hand, the crossbeam requires further cutting, the cutting can be carried out by following different cutting sequences.

One of these sequences is described in European patent EP 3 184 493 by the same applicant and comprises, after cutting the crossbeam, moving the remaining or residual sheet backwards on the rear supporting surface away from the cutting line and bridge, rotating the crossbeam on the front supporting surface and/or partially below the cutting bridge, lifting the sheet remaining after the cutting of the crossbeam above the rear supporting surface, progressively cutting the crossbeam and arranging the cut parts on the rear supporting surface, below the aforesaid remaining sheet.

Once the crossbeam has been cut, the cut parts are removed, after which the remaining sheet is lowered onto the rear supporting surface, fed toward the front supporting surface and positioned before cutting the second crossbeam. The operations described above are repeated for all the crossbeams scheduled by the sheet-cutting programme.

On the other hand, a different sequence is described in patent EP 2 196 440 B1. This sequence essentially comprises separating a first crossbeam as described above, lifting the remaining sheet from the rear supporting surface so as to allow the crossbeam to be rotated on the rear supporting surface and partially inserted under the remaining sheet before feeding it below the cutting bridge, thus obtaining the sheet parts that are progressively moved to the front supporting surface, from which they are then removed.

As with the previous sequence, this sequence is also repeated for each crossbeam to be cut.

Therefore, both the described sequences comprise, after cutting each crossbeam, moving the remaining sheet backwards and lifting it, and before cutting the next crossbeam, lowering the same remaining sheet onto the rear supporting surface, feeding it toward the cutting bridge and repositioning the same.

The handling of the remaining sheet for each crossbeam considerably lengthens the time for cutting the sheet, which increases with the increase in the number of crossbeams to be cut, at the expense, of course, of the productivity of the machine.

Not only that, but the continuous feeding, moving backwards, lifting and lowering of the remaining sheet on the rear supporting surface make it difficult to control the position of the remaining sheet on the rear supporting surface, with the result that even the slightest positioning errors can be amplified during the subsequent cuts, compromising the dimensional quality of the finished products.

In addition to this, the machines used comprise devices for lifting the remaining sheet, which are particularly bulky but necessary to support and lift a residual sheet having a length which, after the cutting of the first crossbeam(s), can still be compared with the length of the starting sheet and, therefore, usually a few metres long.

The need to have very large lifting devices, in addition to increasing the cost of the cutting machine, makes it difficult to reduce the length of the cutting machine, a need that is increasingly felt and desired in order to reduce as much as possible the areas intended for cutting inside the factories.

### DISCLOSURE OF INVENTION

The object of the present invention is to provide a cutting method, different from the known cutting methods, which allows the problems described above to be solved in a simple and inexpensive way, and in particular, allows accurate cuts to be made with compact machines.

A further object of the present invention is to provide a method that, compared to the known methods, allows the production rate to be increased while avoiding slowdowns in the cutting and removal of the products resulting from the cutting of the crossbeams.

According to the present invention, there is provided a method for cutting a glass sheet according to a glass cutting programme comprising a plurality of first cutting lines parallel to each other in order to form a plurality of crossbeams and, for at least part of said crossbeams, a plurality of second cutting lines of the respective crossbeams for forming flat articles, the method being implemented by using a cutting machine comprising, along a longitudinal feeding direction of the glass to be cut:
a front supporting surface;
a rear supporting surface;
a cutting bridge arranged between the front and rear supporting surfaces and comprising cutting means slidable along a cutting path orthogonal to said feeding direction;
handling means for moving at least the glass sheet and the respective crossbeams over said front and rear supporting surfaces;
and lifting means for moving parts of the glass sheet both from and towards said rear supporting surface;
the method comprising the steps of arranging the glass sheet to be cut on the rear supporting surface, feeding it in the longitudinal direction under the cutting bridge, positioning and cutting it along a first intermediate cutting line making a piece of front glass sheet arranged on the front supporting surface and still to be cut along respective first cutting lines and a piece of rear glass sheet arranged on the rear supporting surface and moving the rear piece backwards by spacing it from the cutting bridge, characterised in that it comprises the further step of lifting the piece of rear glass sheet from said rear supporting surface, moving the front piece towards the cutting bridge and cutting the front piece progressively along the respective said first cutting lines forming crossbeams in succession and cutting the last crossbeam formed along the respective said second cutting lines after having moved at least part of the other crossbeams formed below said lifted rear piece.

Preferably, in the method defined above, all said other crossbeams are moved below said lifted rear piece before starting the cutting of the last said crossbeam.

### BRIEF DESCRIPTION OF THE DRAWINGS

The invention will now be described with reference to the accompanying drawings, which illustrate a nonlimiting embodiment thereof, in which:
Figure 1 shows, schematically and substantially in block form, a machine for cutting glass sheets and implementing the method according to the present invention;

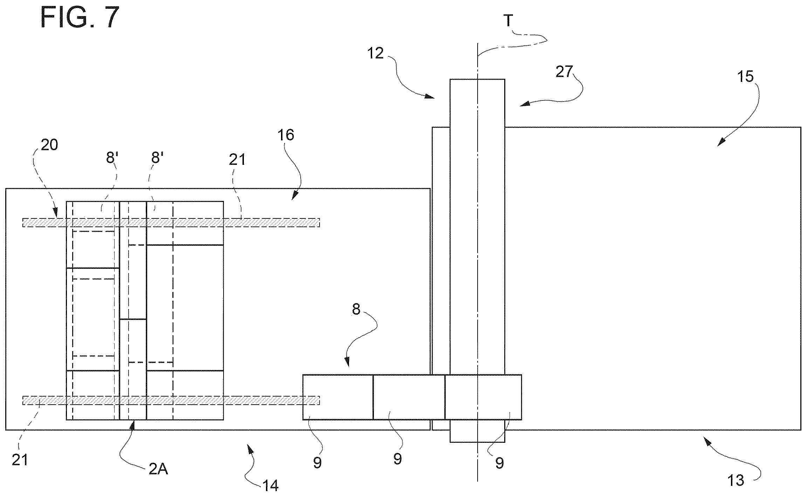

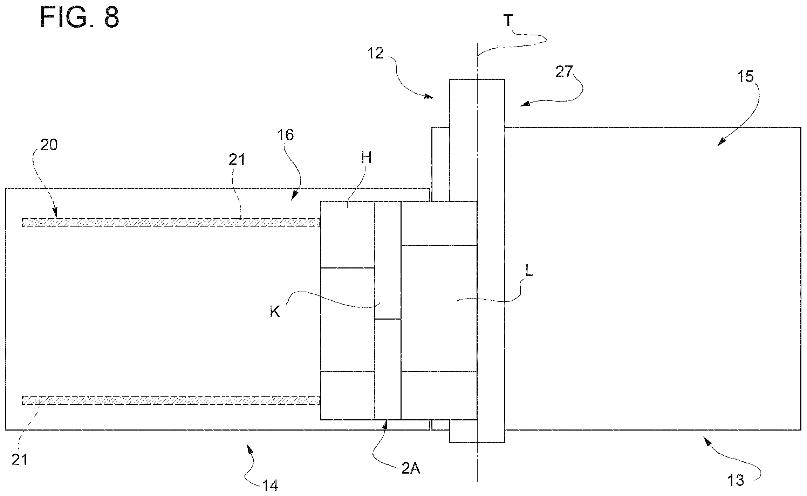

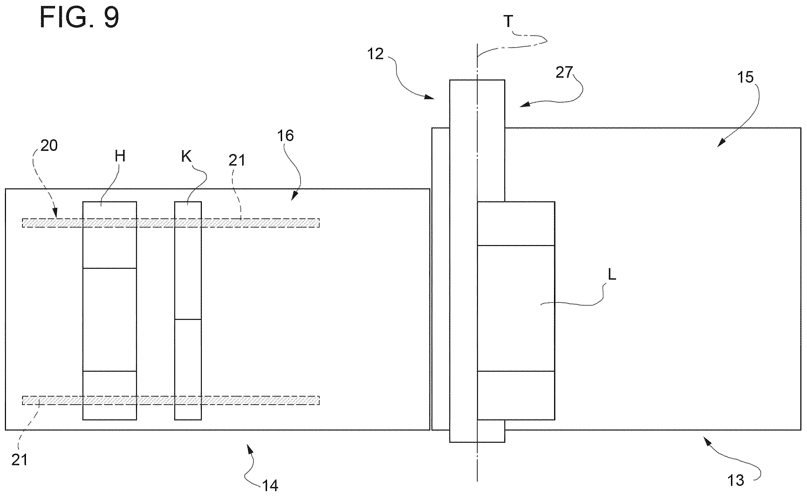

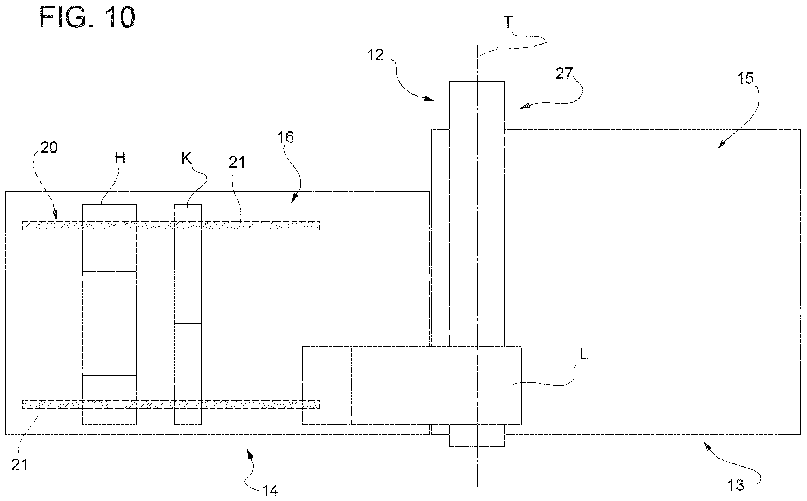

Figures 2 to 10 schematically show a preferred sequence of sheet-cutting operations according to the present invention performed on the cutting machine in Figure 1.

### BEST MODE FOR CARRYING OUT THE INVENTION

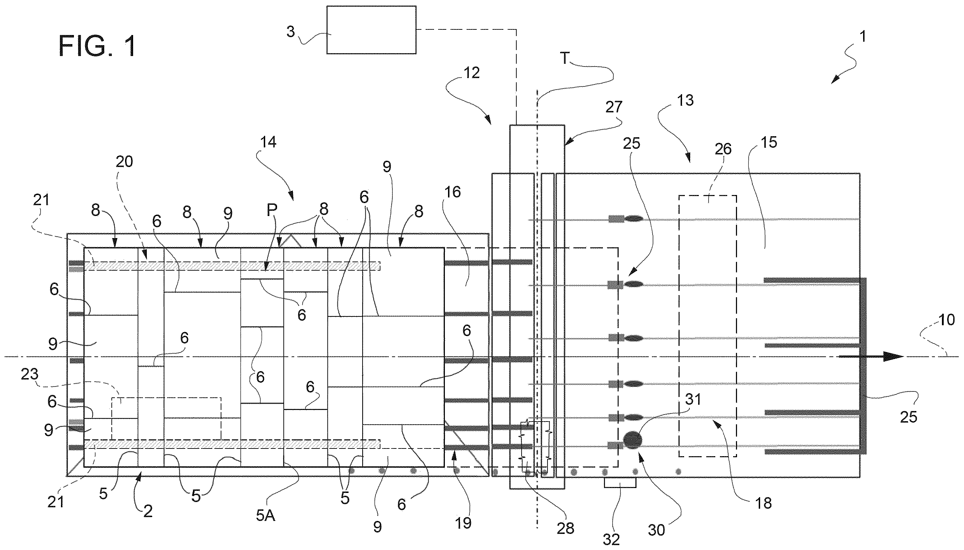

In Figure 1, the number 1 indicates, as a whole, a machine for cutting a laminated glass sheet 2 according to a cutting programme P stored in a control unit 3 of the machine 1 and shown in Figure 1.

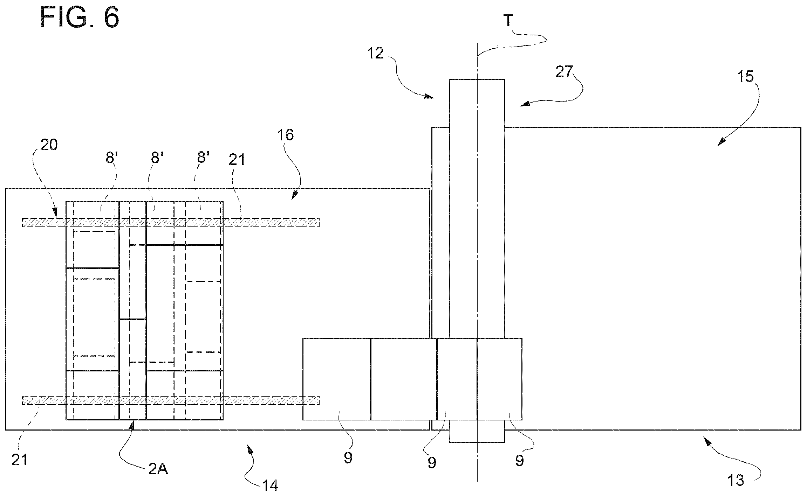

The cutting programme P comprises a plurality of first transverse cutting lines 5 parallel to each other in order to separate a plurality of crossbeams 8 from the sheet 2 and, for at least part of the crossbeams 8, one or more cutting lines 6 orthogonal to the lines 5 in order to divide each crossbeam 8 into two or more flat articles, indicated with 9 (Figure 6).

However, cutting programmes different from the one shown can be implemented in order to change the geometry and/or surface or the number of crossbeams 8 and/or flat articles 9. By way of example, such programmes could comprise one or more cutting lines forming an angle other than zero or 90° and/or cutting lines having curved portions.

In any case, again with reference to Figure 1, the machine 1 comprises, arranged along a longitudinal direction 10 and a feeding direction of the sheet 2 to be cut, a fixed sheet-cutting station 12, a front table 13 and a rear table 14 arranged downstream and upstream of said station 12, respectively.

The tables 13 and 14 define a front sheet-supporting surface and a rear sheet-supporting surface, respectively, which are indicated by 15 and 16 and are parallel to each other and substantially coplanar. The tables 13 and 14 are provided with respective sheet-feeding devices, known per se, advantageously of the belt type, indicated as 18 and 19.

Again, with reference to Figure 1, the machine 1 also comprises a sheet-lifting unit 20 associated with the rear table 14 in order to lift part of the sheet 2 from the rear supporting surface 16.

The lifting unit 20 is known per se, and in the particular example described herein it comprises a bridge-frame structure having two coplanar longitudinal members 21 parallel to the longitudinal direction and supporting the part of the sheet to be machined. The lifting unit 20 further comprises a motorized lifting device 23 electrically connected to the unit 3 for moving the longitudinal members 21 between a lowered position, in which the longitudinal members 21 are arranged below or are coplanar with the rear supporting surface 16, and a raised position, in which the longitudinal members 21 are lifted from the rear surface 16 by such an amount as to allow pieces of the sheet to be machined to travel and/or lie on the supporting surface 16.

Alternatively, the lifting unit 20 is of the type described in patent EP 3 184 493 B1, which is herein referred to in its entirety and for the sake of completeness of description.

Alternatively, moreover, the unit 20 is of the oscillating type, i.e., with the longitudinal members 21 hinged to a structure of the rear table in order to exclusively lift the front edge of the piece of sheet or to lift the front edge to a greater extent compared to a rear edge of the same piece of sheet.

Again, with reference to Figure 1, the machine 1 further comprises a motorized sheet abutment bridge 25, known per se, associated with the front table 13 and movable with respect to said front table 13 in the longitudinal direction 10 between two extreme end-stop longitudinal positions, one of which is retracted and adjacent to the cutting station 12, i.e., near a first end of the front surface 12, and the other is spaced from said station 12, arranged at a second longitudinal end of the front surface 15, as shown in Figure 1.

The table 13 is also coupled to a sheet handling device 26, which is independent of, or preferably carried by, the abutment bridge 25, also known per se and not described in detail, schematically illustrated and advantageously of the suction cup type, which is motorized and controlled by the unit 3 in order to move in opposite directions along direction 10 and arranged beneath the front surface 15.

Again, with reference to Figure 1, the cutting station 12 houses a cutting bridge 27, known per se and comprising a single cutting head for cutting monolithic glass sheets 2 or two facing cutting heads, as in the example described herein, for cutting laminated glass sheets 2, i.e., comprising two lateral glass sheets and one layer of thermoplastic material in between. In any case, the cutting head(s) is/are carried by respective motorized carriages 28, only one of which is visible in Figure 1.

The carriages 28 are movable in opposite directions along a cutting direction T orthogonal to the longitudinal direction 10 and extending between the two surfaces 15 and 16.

Again, with reference to Figure 1, the table 13 supports an assembly 30 for rotating the crossbeams 8, known per se and, for example, of the type comprising a head 31 rotatable about an axis orthogonal to the supporting surface 15, and a motorized carriage 32 movable in opposite directions parallel to direction 10 under the control of the unit 3. The carriage 32 and at least one of the carriages 28 carry respective devices for gripping and holding the crossbeams 8, for example of the suction cup or clamp type.

According to a variant, not shown, the assembly 30 for rotating the crossbeams 8 is carried by the table 14 in order to rotate the crossbeams 8 above the rear surface 16.

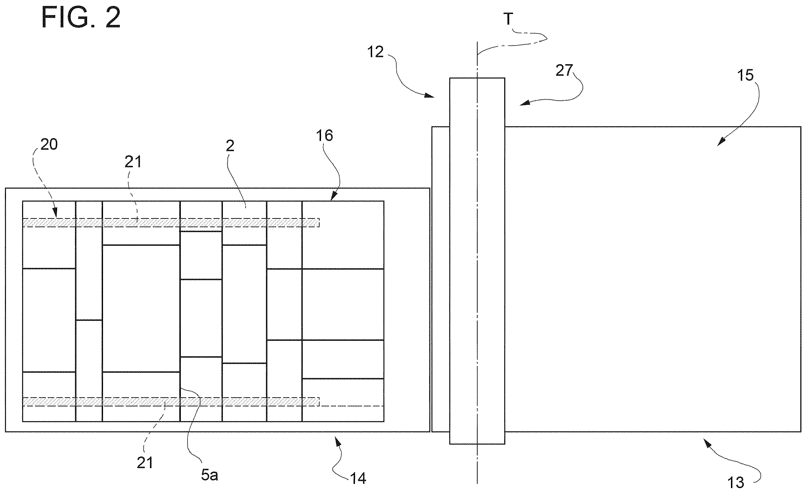

The operation of the machine 1 will now be described starting from the condition in which a sheet 2 to be machined is resting on the front surface 16 of the table 14 (Figure 2), the longitudinal members 21 of the unit 20 are arranged below the surface 16, and the abutment bridge 32 is arranged in its forward position at the end of the surface 15 longitudinally opposite to the one converging into the station 12.

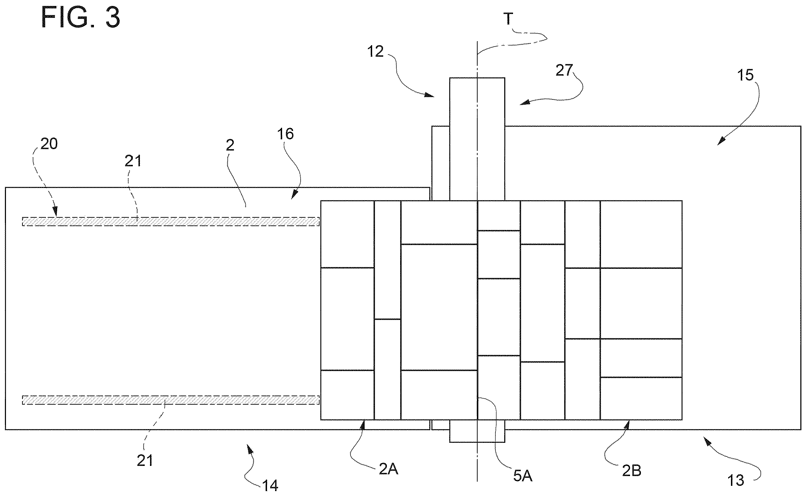

Starting from this condition, the sheet 2 is fed on the surface 16 in the longitudinal direction 10 and through the station 12 until it abuts against the bridge 25, which has been previously arranged in a position such that an intermediate cutting line 5A coincides with the cutting line T, as shown in Figure 3. At this point, the sheet 2 is cut along the line 5A to form a rear piece 2A and a front piece 2B (Figure 3) .

The line 5A is chosen so as to substantially divide the sheet 2 in half and in any case so that the piece 2B consists of two or more crossbeams 8. In this specific case, the piece 2B comprises four crossbeams 8 whereas the piece 2A comprises three crossbeams 8. Obviously, the number of crossbeams 8 of each piece 2A, 2B depends on the size of the individual crossbeams 8 in the longitudinal direction and therefore the choice of the line 5A is made to minimize the longitudinal length of the machine, on the one hand, and to optimize the cutting time, on the other.

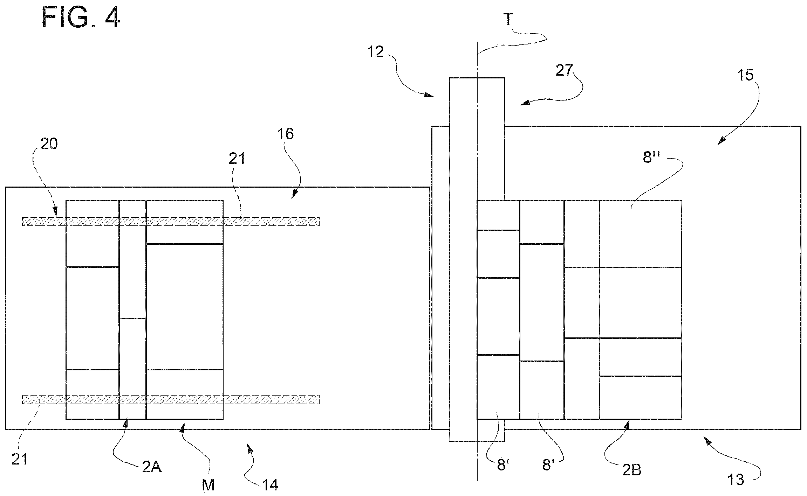

After cutting along the line 5A, the front piece 2B is kept stationary, while the rear piece 2A is moved backwards on the rear surface 16, spacing it from the station 12, and brought above the longitudinal members 21, as shown in Figure 4. Thereafter, the unit 20 is activated and the piece 2A is lifted from the surface 16 by a distance greater than the thickness of the sheet 2, clearing the entire surface 16 and making it available, and delimiting thereabove a temporary storage area, indicated by M.

At this point, the piece 2B is progressively moved backwards and through the station 12, where the respective crossbeams, indicated by 8', are progressively separated. As the crossbeams 8' are cut, they are moved on the surface 16 below the longitudinal members 21 and the piece 2A, and temporarily stored in the temporary storage area M.

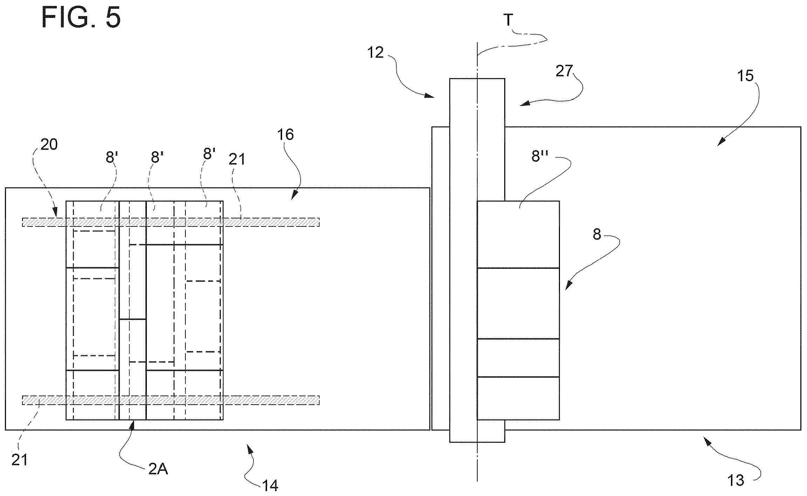

Instead, the last cut crossbeam, indicated by 8" in Figures 4 and 5, is gripped and rotated anticlockwise, in Figure 5 by 90°, by the rotation assembly 30, as shown in Figure 6, conveniently, but not necessarily, bringing all the respective lines 6 on the side of the surface 16. Thereafter, the crossbeam 8" is fed towards the surface 15 and progressively cut along the respective lines 6, thus forming the flat articles 9 which, progressively or once the cutting of the piece 8" is completed, are moved away from the surface 15.

Alternatively, the crossbeam 8" is rotated on the surface 15, arranging it with all its cutting lines 6 on the same side of the surface 15, and cut by moving it toward the surface 16, and then the flat articles 9 thus formed are moved back to the surface 15 through the station 12.

Once the cutting of the crossbeam 8" is completed, the last crossbeam 8' housed in the storage area M is picked up and rotated by 90° before being cut along the respective lines 6 following the steps for cutting the crossbeam 8".

Once the cutting of the crossbeam 8' is completed, all the crossbeams 8' arranged in the storage area M are progressively rotated and cut by following the steps described above.

Once the crossbeams 8' arranged on the supporting surface 16 have been cut, the piece 2A is lowered and returned to the supporting surface 16 and progressively cut along the respective lines 5, thus forming the respective crossbeams H, K and L; after which the crossbeams H and K are moved on the supporting surface 16, while the crossbeam L is cut first by following the steps described above. Once the cutting of the crossbeam L is completed, the crossbeams H and K are also cut, for example, as described for the crossbeams 8' of the piece 2B.

From the above, it is apparent that the division of the input sheet 2 into two pieces 2A and 2B of comparable longitudinal dimensions, and of which at least the piece 2B consists of several crossbeams 8, allows one part of the input sheet 2 to be cut, while the other part is kept in a raised fixed waiting position and then lowered only once to cut and separate the respective crossbeams 8 in succession. In this way, the cutting procedure is simplified, and the time required for cutting the sheet 2 is significantly reduced, and consequently, the productivity of the machine 1 is increased.

The cutting method described herein and, in particular, the insertion of the crossbeams 8' of the piece 2B, with the exception of the last separated crossbeam, below the piece 2A also allows the use of lifting units of particularly small dimensions compared to those used in known solutions, since they are provided for lifting a "residual sheet", i.e., the rear piece 2A, the length of which in the longitudinal direction 10 is approximately half of the input sheet 2.

Small lifting units allow the length of the machine 1 to be reduced in the longitudinal direction, a feature that is increasingly required in order to contain the areas available for cutting the sheets within factories.

In addition to this, it appears that the cutting method described herein, compared to known solutions, makes it possible to avoid continuous lifting and lowering of the "residual sheet", in this specific case the piece 2A, which is lifted and lowered only once.

Similarly, both the piece 2A and the piece 2B, when cut, can be moved toward the station 12 and never moved back from it after the cutting of a crossbeam, thereby avoiding errors due to the clearance of the kinematic movement chain, thus guaranteeing the dimensional quality of the finished products.

With regard to the crossbeams 8, it is also apparent that each crossbeam 8, in turn, is always cut by moving it only in one direction, and when it is moved toward the surface 15, the flat articles B are arranged directly on the supporting surface 15, therefore already on the same side as the output of the finished articles, so that the flat articles 9 can be quickly removed. This aspect also contributes to reducing the time required for cutting the sheet.

From the above, it is also apparent that both the pieces 2A, 2B and the crossbeams 8 are obtained without the sheet 2, in the former case, or the pieces 2A, 2B, in the latter case, ever being uncoupled from the feeding devices, and this ensures dimensional and shape constancy of the manufactured flat products B as the sheet/piece references imposed by the abutment bridge 25 are maintained.

It is therefore apparent that the presence of a temporary storage area for accommodating the crossbeams 8 still to be machined considerably facilitates the cutting of the remaining crossbeams.

From the above, it is clear that the temporary storage area M may not accommodate all the crossbeams 8' of the piece 2B transferred onto the surface 16. In fact, at least one of them could again be arranged on the surface 16 but in front of an inlet/outlet of the storage area M if this does not hinder the rotation of the crossbeam 8" or the arrangement of the flat products 9 when they are arranged on the surface 16.

In addition to this, the steps for cutting the crossbeams 8' when taken from the temporary storage area M could be different from those described herein, and the choice of the intermediate line 5A for dividing the sheet into the two pieces 2A and 2B could also be different from that described herein, yet always with the intention of housing at least part of the crossbeams of the piece 2B at least partially below the piece 2A.

On the other hand, as regards the lifting of the piece 2A from the supporting surface 16, it is obvious that sheet lifting devices different from the device 20 described herein by way of example may be provided, for example, in order to simplify the machine from a constructional point of view or to lower costs.

## Claims

1. A method for cutting a glass sheet according to a glass cutting programme comprising a plurality of first cutting lines parallel to each other in order to form a plurality of crossbeams and, for at least part of said crossbeams, a plurality of second cutting lines of the respective crossbeams for forming flat articles, the method being implemented by using a cutting machine comprising, along a longitudinal feeding direction of the glass to be cut:
a front supporting surface;
a rear supporting surface;
a cutting bridge arranged between the front and rear supporting surfaces and comprising cutting means slidable along a cutting path orthogonal to said feeding direction;
handling means for moving at least the glass sheet and the respective crossbeams over said front and rear supporting surfaces;
and lifting means for moving parts of the glass sheet both from and towards said rear supporting surface;
the method comprising the steps of arranging the glass sheet to be cut on the rear supporting surface, feeding it in the longitudinal direction under the cutting bridge, positioning and cutting it along a first intermediate cutting line making a piece of front glass sheet arranged on the front supporting surface and still to be cut along respective first cutting lines and a piece of rear glass sheet arranged on the rear supporting surface and moving the rear piece backwards by spacing it from the cutting bridge, **characterised in that** it comprises the further step of lifting the piece of rear glass sheet from said rear supporting surface, moving the front piece towards the cutting bridge and cutting the front piece progressively along the respective said first cutting lines forming crossbeams in succession and cutting the last crossbeam formed along the respective said second cutting lines after having moved at least part of the other crossbeams formed below said lifted rear piece.

2. The method according to claim 1, **characterised in that** all of the other said crossbeams are moved below said lifted rear piece before starting the cutting of the last said crossbeam.

3. The method according to claim 1 or 2, **characterised in that** the cutting of said last crossbeam is carried out by rotating said last crossbeam in order to arrange at least part of the respective said second cutting lines over said rear supporting surface.

4. The method according to claim 3, **characterised in that** the cutting of said last crossbeam is carried out by rotating said last crossbeam in order to arrange all of said second cutting lines over said rear supporting surface and progressively moving the cut parts over said front supporting surface.

5. The method according to any one of the preceding claims, **characterised by** picking up said other crossbeams one at a time, rotating each of the other crossbeams over said rear surface and cutting it along the respective said second cutting lines.

6. The method according to any one of the claims from 1 to 4, **characterised by** picking up said other crossbeams one at a time, moving them over said front supporting surface, rotating each of the other crossbeams over said front supporting surface and cutting it along the respective said second cutting lines.

7. The method according to claim 5 or 6, **characterised by** lowering said rear piece on said rear supporting surface after having completed the cutting of said crossbeams along said second cutting lines, feeding the rear piece towards said cutting bridge and progressively cutting it separating the respective crossbeams from each other.

8. The method according to claim 7, **characterised by** cutting the last crossbeam separated from said second piece of glass along the respective second cutting lines after having moved the remaining crossbeams on said rear surface.

## Patentansprüche

1. Ein Verfahren zum Schneiden einer Glasscheibe gemäß einem Glasschneideprogramm, das eine Mehrzahl von ersten, zueinander parallelen Schneidlinien umfasst, um eine Mehrzahl von Querriegeln zu bilden, und für mindestens einen Teil der Querriegel eine Mehrzahl von zweiten Schneidlinien der jeweiligen Querriegel zur Bildung von flachen Gegenständen, wobei das Verfahren unter Verwendung einer Schneidemaschine durchgeführt wird, die entlang einer Längsvorschubrichtung des zu schneidenden Glases umfasst:
eine vordere Haltemittelfläche;
eine hintere Haltemittelfläche;
eine Schneidbrücke, die zwischen der vorderen und der hinteren Haltefläche angeordnet ist und Schneidmittel umfasst, die entlang einer Schneidbahn rechtwinklig zur Vorschubrichtung verschiebbar sind;
Handhabungsmittel zum Bewegen zumindest der Scheibe und der jeweiligen Querriegel über die vordere und hintere Haltefläche;
und Hebemittel zum Bewegen von Teilen der Scheibe sowohl von der hinteren Haltefläche weg als auch zu ihr hin, wobei das Verfahren die folgenden Schritte umfasst: Anordnen der zu schneidenden Scheibe auf der hinteren Haltefläche, Zuführen der Scheibe in Längsrichtung unter die Schneidevorrichtung, sie Positionieren entlang einer ersten Zwischenschnittlinie, und Schneiden, wodurch ein Stück der vorderen Scheibe, das auf der vorderen Haltemittelfläche angeordnet ist und noch entlang der jeweiligen ersten Schnittlinien zu schneiden ist, und ein Stück der hinteren Glasscheibe, das auf dem hinteren Haltemittel angeordnet ist, hergestellt wird, und Bewegen des hinteren Stücks nach hinten, indem es von der Schneidbrücke beabstandet wird, **dadurch gekennzeichnet, dass** es umfasst den weiteren Schritt des Anhebens des Stücks der hinteren Scheibe von der hinteren Haltemittelfläche, des Bewegens des vorderen Stücks in Richtung der Schneidbrücke und Schneiden des vorderen Teils fortschreitend entlang der jeweiligen ersten Schnittlinien, die nacheinander Querriegel bilden, und Schneiden des letzten Querriegels, der entlang der jeweiligen zweiten Schnittlinien gebildet wird, nachdem zumindest ein Teil der anderen Querriegel, die unter dem angehobenen hinteren Teil gebildet werden, bewegt wurde.

2. Das Verfahren nach Anspruch 1, **dadurch gekennzeichnet, dass** alle anderen Querriegel unter das angehobene hintere Teil bewegt werden, bevor mit dem Schneiden des letzten Querriegels begonnen wird.

3. Ein Verfahren nach Anspruch 1 oder 2, **dadurch gekennzeichnet, dass** das Schneiden des letzten Querriegels durch Drehen des letzten Querriegels durchgeführt wird, um zumindest einen Teil der jeweiligen zweiten Schnittlinien über der hinteren Haltefläche anzuordnen.

4. Ein Verfahren nach Anspruch 3, **dadurch gekennzeichnet, dass** das Schneiden des letzten Querriegels durch Drehen des letzten Querriegels durchgeführt wird, um alle der zweiten Schnittlinien über der hinteren Haltefläche anzuordnen und die geschnittenen Teile nach und nach über die vordere Haltefläche zu bewegen.

5. Das Verfahren nach einem der vorhergehenden Ansprüche, **dadurch gekennzeichnet, dass** die anderen Querriegel einzeln aufgenommen werden, jeder der anderen Querriegel über die hintere Fläche gedreht wird und entlang der jeweiligen zweiten Schnittlinien geschnitten wird.

6. Das Verfahren nach einem der Ansprüche 1 bis 4, **dadurch gekennzeichnet, dass** die anderen Querriegel jeweils einzeln aufgenommen, über die vordere Haltefläche bewegt, jeder der anderen Querriegel über die vordere Haltefläche gedreht und entlang der jeweiligen zweiten Schnittlinien geschnitten wird.

7. Das Verfahren nach Anspruch 5 oder 6, **dadurch gekennzeichnet, dass** das hintere Stück auf die hintere Haltefläche abgesenkt wird, nachdem das Schneiden der Querriegel entlang der zweiten Schnittlinien abgeschlossen ist, dass das hintere Stück in Richtung der Schneidebrücke zugeführt wird und dass es schrittweise geschnitten wird, wobei die jeweiligen Querriegel voneinander getrennt werden.

8. Das Verfahren nach Anspruch 7, **dadurch gekennzeichnet, dass** der letzte Querriegel, der von der zweiten Glasscheibe getrennt wurde, entlang der jeweiligen zweiten Schnittlinien geschnitten wird, nachdem die verbleibenden Querriegel auf der hinteren Fläche bewegt wurden.

## Revendications

1. Procédé de découpe d'une feuille de verre selon un programme de découpe de verre comprenant une pluralité de premières lignes de découpe parallèles les unes aux autres pour former une pluralité de traverses et, pour au moins une partie desdites traverses, une pluralité de secondes lignes de coupe des traverses respectives pour former des articles plats, le procédé étant mis en œuvre en utilisant une machine de coupe comprenant, le long d'une direction d'alimentation longitudinale du verre à couper :
une surface de support avant ;
une surface de support arrière ;
un pont de coupe agencé entre les surfaces de support avant et arrière et comprenant des moyens de coupe pouvant coulisser le long d'un chemin de coupe orthogonal à ladite surface d'alimentation ;
des moyens de manutention pour déplacer au moins la feuille de verre et les traverses respectives sur lesdites surfaces de support avant et arrière ;
et des moyens de levage pour déplacer des parties de la feuille de verre à la fois depuis et vers ladite surface de support arrière ;
le procédé comprenant les étapes consistant à disposer la feuille de verre à découper sur la surface de support arrière, à l'amener dans le sens longitudinal sous le pont de coupe, à la positionner et à la découper le long d'une première ligne de coupe intermédiaire en réalisant un morceau de feuille de verre avant disposé sur la surface de support avant et devant encore être découpé le long de premières lignes de coupe respectives et un morceau de feuille de verre arrière disposé sur la surface de support arrière et faisant reculer la pièce arrière en l'éloignant du pont de coupe, **caractérisé en ce qu'**il comprend l'étape supplémentaire consistant à soulever le morceau de feuille de verre arrière de ladite surface de support arrière, déplacer le morceau avant vers le pont de coupe et couper progressivement le morceau avant le long desdites premières lignes de coupe respectives en formant des traverses en succession et couper la dernière traverse formée le long desdites secondes lignes de coupe respectives après avoir déplacé au moins une partie des autres traverses formées sous ladite pièce arrière soulevée.

2. Procédé selon la revendication 1, **caractérisé en ce que** toutes les autres dites traverses sont déplacées sous ladite pièce arrière soulevée avant de commencer la coupe de la dernière dite traverse.

3. Procédé selon la revendication 1 ou 2, **caractérisé en ce que** la coupe de ladite dernière traverse est effectuée en faisant tourner ladite dernière traverse afin de disposer au moins une partie desdites secondes lignes de coupe respectives sur ladite surface de support arrière.

4. Procédé selon la revendication 3, **caractérisé en ce que** la coupe de ladite dernière traverse est réalisée en faisant tourner ladite dernière traverse afin de disposer l'ensemble desdites secondes lignes de coupe sur ladite surface de support arrière et en déplaçant progressivement les pièces découpées sur ladite surface de support avant.

5. Procédé selon l'une quelconque des revendications précédentes, **caractérisé par** le fait de saisir lesdites autres traverses une par une, de faire tourner chacune des autres traverses sur ladite surface arrière et de les couper le long desdites secondes lignes de coupe respectives.

6. Procédé selon l'une quelconque des revendications 1 à 4, **caractérisé par** le fait de saisir lesdites autres traverses une par une, de les déplacer sur ladite surface de support avant, de faire tourner chacune des autres traverses sur ladite surface de support avant et de les couper le long desdites secondes lignes de coupe respectives.

7. Procédé selon la revendication 5 ou 6, **caractérisé par** l'abaissement de ladite pièce arrière sur ladite surface de support arrière après avoir terminé la coupe desdites traverses le long desdites secondes lignes de coupe, l'avance de la pièce arrière vers ledit pont de coupe et sa coupe progressive en séparant les traverses respectives les unes des autres.

8. Procédé selon la revendication 7, **caractérisé par** la coupe de la dernière traverse séparée dudit second morceau de verre le long des secondes lignes de coupe respectives après avoir déplacé les traverses restantes sur ladite surface arrière.
